# EUROPÄISCHE PATENTANMELDUNG

(11) **EP 2 653 066 A1**
(43) Veröffentlichungstag der Anmeldung: **23.10.2013**
(21) Anmeldenummer: 13163268.9
(22) Anmeldetag: 11.04.2013
(51) Int. Cl.: A47B 21/06, A47B 96/14

(54) **Stützbein für Arbeitsmöbel**

(30) Priorität: 20.04.2012 DE 102012007775
(71) Anmelder: Elabo GmbH, 74564 Crailsheim (DE)
(72) Erfinder: Nehler, Jürgen, 61231 Bad Nauheim (DE)
(74) Vertreter: Stolmár & Partner

(57) **Zusammenfassung**

Die Erfindung betrifft ein Stützbein (10) für ein Arbeitsmöbel umfassend ein sich längs erstreckendes Profil (12) mit einem sich zumindest abschnittsweise längs erstreckenden Hohlraum (14), in dem Kabel geführt werden können, wobei das Stranggussprofil an dem Hohlraum eine sich zumindest abschnittsweise längserstreckende Öffnung (16) aufweist und an zumindest einem Randbereich der Öffnung und/oder in dem Hohlraum Befestigungsmittel (26) zum Befestigen von Anschlusselementen (32) vorgesehen sind, und das Stützbein ferner eine Außenwand (13) und ferner ein Innenprofil (24) und/oder zumindest eine Innenverstrebung (22) aufweist.

## Beschreibung

### Gebiet der Erfindung

Die vorliegende Erfindung betrifft ein Stützbein für ein Arbeitsmöbel, in dem Kabel und/oder Leitungen geführt werden können, und ein Arbeitsmöbel mit einem solchen Stützbein.

### Stand der Technik

Es ist notwendig, dass bei Arbeitsmöbeln oder auch Funktionsmöbeln, wie beispielsweise Arbeitstischen, Beistelltischen von Patienten und dergleichen, verschiedenste Anschlusselemente angebracht werden können. Solche Anschlusselemente können Steckdosen, Datendosen, Gaskupplungen und dergleichen umfassen. Da für diese Anschlusselemente Kabel, Drähte und andere Leitungen verlegt werden müssen und diese Leitungen nach Möglichkeit abgedeckt werden sollen, gibt es Versorgungskanäle, die an den Arbeitsmöbeln angebracht werden. Eine solche Lösung zeigt die EP 1 629 746 A2. Darin ist eine Versorgungseinheit offenbart, die zwei vertikal zueinander beabstandete Versorgungskanäle zur Medien- und Energieführung aufweist. Zwischen diesen zwei Versorgungskanälen werden dann Möbelelemente wie ein Schrank, kastenförmige Ablageelemente, ein Lichtelement oder Gasanschlusselemente vorgesehen. Diese Versorgungskanäle benötigen jedoch den Platz an dem sie installiert werden sollen. Auch wenn sie flexibel ausgestaltet werden können, schränken die benachbarten Versorgungskanäle doch die Ausgestaltungsmöglichkeiten am Einsatzort ein. Das gleiche gilt für anders ausgestaltete Versorgungskanäle, die ebenfalls separat angebracht werden müssen.

Die DE 19606193 A1 offenbart eine Steckdosenleiste, die in ihren Abmessungen im Wesentlichen einem Tischbein entspricht. Diese Steckdosenleiste hat jedoch den Nachteil, der Querschnitt der Steckdosenleiste ein geschlossenes Profil aufweisen muss, damit die Stützfunktion der Leiste erfüllt werden kann.

### Darstellung der Erfindung

Aufgabe der vorliegenden Erfindung ist es daher, eine Möglichkeit bereitzustellen, die eine flexible Anordnung von Anschlusselementen bereitstellt, die gleichzeitig aber platzsparend und stabil ausgeführt wird.

Mit Anschlusselement ist prinzipiell ein Element gemeint, dass an bestimmte Leitungen angeschlossen wird. Beispiele für solche Anschlusselemente sind herkömmliche Steckdosen, Steckverbindungen jeder Art (bspw. optische Verbindungen), schaltende Elemente (Schalter), Sicherungen, Schütz-Elemente oder andere elektrische Schaltgeräte, sowie auch Wasserhähne oder Gasversorgungseinrichtungen. Es ist also weder zwingend noch ausgeschlossen, dass etwas an ein Anschlusselement angeschlossen wird.

Die Aufgabe wird gelöst durch ein Stützbein für ein Arbeitsmöbel mit den Merkmalen des Anspruchs 1. Weitere die Erfindung ausgestaltende Merkmale sind in den Unteransprüchen enthalten.

Ein erfindungsgemäßes Stützbein für ein Arbeitsmöbel umfasst ein sich längs erstreckendes Stranggussprofil mit einem sich zumindest abschnittsweise längs erstreckenden Hohlraum, in dem Kabel, Drähte, Schläuche und/oder andere Leitungen geführt werden können, wobei das Stranggussprofil an dem Hohlraum eine sich zumindest abschnittsweise längs erstreckende Öffnung aufweist und an zumindest einem Randbereich der Öffnung und/oder in dem Hohlraum ein Befestigungsmittel zum Befestigen von Anschlusselementen vorgesehen ist, wobei das Stützbein ferner eine Außenwand und ferner ein Innenprofil und/oder zumindest eine Innenverstrebung aufweist. Ein solches Stützbein kann verschiedene Anschlusselemente für verschiedene Zwecke (Stromanschluss, Gasanschluss, Lichtleiter, Computeranschlüsse, usw.) bereitstellen, verbraucht gleichzeitig jedoch keinen weiteren Platz für Versorgungsleitungen und gewährleistet so ausreichend Funktionalität des Funktionsmöbels. Ferner ist es aber gleichzeitig ausreichend satbil, so dass es auch große Lasten tragen kann. Das Innenprofil ist dabei vorzugsweise für die Kabel- bzw. Leitungsführung vorgesehen, d.h. dass der Hohlraum auch im Innenprofil angeordnet ist. Dies ermöglicht es, einen bestimmten Raum vom Rest des Stützbeins getrennt zu halten, der ausschließlich für die Leitungsführung vorgesehen ist. Dadurch können andere Räume beispielsweise für die Innenverstrebungen verwendet werden.

Optional weist das Stützbein auch oder statt dem Innenprofil Innenverstrebungen auf, die die Steifigkeit des Stützbeins weiter erhöhen. Dadurch kann das Stützbein auch größere Lasten tragen. Die Innenverstrebungen verbinden vorzugsweise das Innenprofil mit der Außenwand des Stranggussprofils. Diese Anordnung der Innenverstrebungen erhöht die Steifigkeit des Stützbeins und stabilisiert die Relativlage zwischen Innenprofil und Außenwand. Weiterhin ist es bevorzugt, dass das Innenprofil und die Außenwand des Stranggussprofils einstückig sind, d. h. auch das Innenprofil ist Teil des Stranggussprofils sind.

Ferner kann das Stranggussprofil im Wesentlichen eine vieleckige Außenkontur aufweisen, die insbesondere nach innen gerichtete Vorsprünge beispielsweise mit einem Schwalbenschwanz- oder einem T-Profil aufweist. Eine vieleckige Kontur erhöht die Steifigkeit, insbesondere in Radial- und Umfangsrichtung des Stützbeins. Die Vorsprünge, bzw. die dadurch entstehenden Nuten an der Außenwand können als Befestigungsmittel des Stützbeins am Arbeitsmöbel verwendet werden.

Vorzugsweise weist das Stützbein an zumindest einem Randbereich der Öffnung und/oder in dem Hohlraum zumindest eine sich längs erstreckende Nut auf, die als Befestigungsmittel vorgesehen ist. Eine solche sich längs erstreckende Nut ermöglicht dabei, dass die entsprechenden Anschlusselemente absolut höhenflexibel angeordnet werden können und dabei keinerlei Beschränkungen unterliegen. Bevorzugt ist dabei, dass zumindest eine Nut zur Schraubbefestigung von Anschlusselementen und/oder einer Abdeckplatte ausgebildet ist. Das kann derart geschehen, dass die Nut einen sich verjüngenden Abschnitt aufweist. So können auch verschiedene Befestigungsmittel, wie z.B. Schrauben verschiedener Größe und/oder Breite, zur Befestigung eingesetzt werden. Die Nut erstreckt sich dabei vorzugsweise über die gesamte Länge des Hohlraums, kann aber auch nur an bestimmten Abschnitten vorgesehen sein.

In den Randbereichen der Öffnung können ein oder mehrere Anschläge vorgesehen sein, an denen die Anschlusselemente anschlagen können. Diese Anschläge sind vorzugsweise als eine oder mehrere Führungswände ausgebildet, die zumindest abschnittweise am Randbereich vorgesehen sind. So ist eine einheitliche oder zumindest vorbestimmte Ausrichtung der Anschlusselemente gewährleistet, sowie einheitliche Abstände zwischen Führungswand und Befestigungsmitteln vorgegeben. Dies erleichtert beispielsweise standardisierte Anschlusselemente bzw. deren Befestigung.

Vorzugsweise wird die Öffnung des Stützbeins in dem Hohlraum von zumindest einer Plattenanordnung abgedeckt. Die Plattenanordnung kann vorzugsweise segmentartig sein, sodass einzelne Platten von der Öffnung abgenommen werden können, die Öffnung aber dann nur in diesem Segment freigegeben ist. So wird ein ansprechendes Äußeres auch mit montierten Anschlusselementen ermöglicht, gleichzeitig die im Hohlprofil geführten Leitungen, Drähte und Kabel vor Verschmutzungen von außen geschützt, und auch vor anderen störenden Einflüssen bewahrt.

Ein solches Stützbein wird vorzugsweise an Arbeitsmöbeln wie einem Arbeitstisch, einem Beistelltisch, einem Pult oder dergleichen verwendet. Insbesondere kann dabei das Arbeitsmöbel selbst einen Kabelkanal aufweisen, wobei der Kabelkanal dann vorzugsweise mit dem Hohlraum des Hohlprofils verbunden ist, sodass die Kabel, Leitungen und Drähte über das Stützbein in den Kabelkanal hineingeführt werden können.

### Kurze Beschreibung der Figuren

- Figur 1: zeigt einen Querschnitt eines Profils einer bevorzugten Ausführungsform eines erfindungsgemäßen Stützbeins;
- Figur 2: zeigt eine Frontansicht auf das Stützbein aus Figur 1;

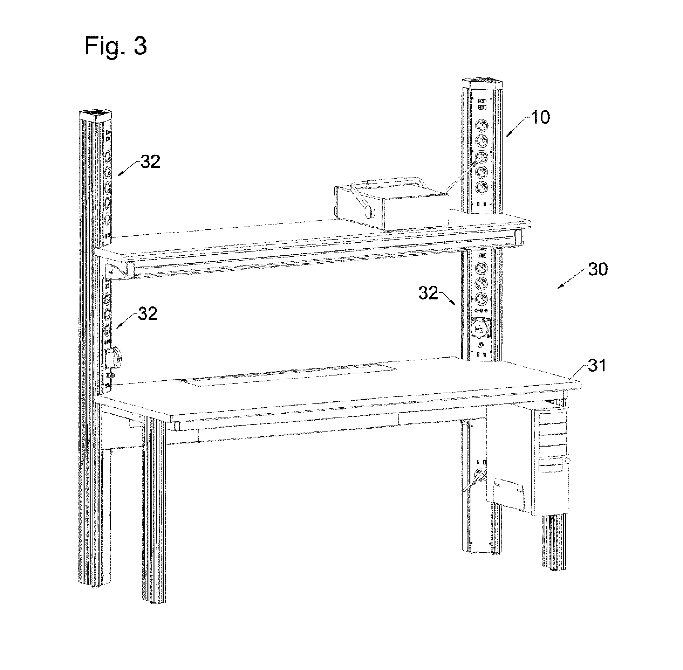

- Figur 3: zeigt ein Arbeitsmöbel an dem die erfindungsgemäßen Stützbeine mit Anschlusselementen montiert sind.

### Detaillierte Beschreibung der bevorzugten Ausführungsformen

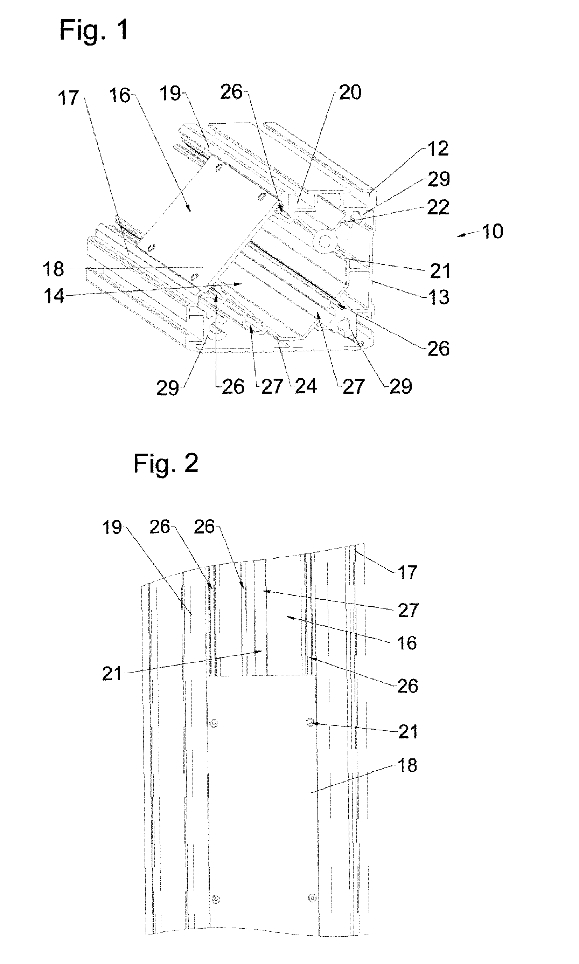

Figur 1 zeigt eine isometrische Ansicht mit einem Schnitt durch ein Stützbein 10 für ein Arbeitsmöbel (30) gemäß der vorliegenden Erfindung. Das Stützbein (10) ist als Stranggussprofil 12 ausgebildet, dass eine Außenwand 13 umfasst. Der Schnitt zeigt die Außenkontur des sich längs erstreckenden Profils 12 mit zumindest einem sich abschnittsweise längs erstreckenden Hohlraum 14, in dem Kabel oder Leitungen (nicht gezeigt) geführt werden können. Die Kabel oder Leitungen können elektrische Leitungen, Gasleitungen, pneumatische Leitungen, hydraulische Leitungen, Glasfaserkabel oder andere optische Leitungen, Wasserleitungen und andere Leitungen sein. An einer Seite des Hohlraums 14 ist eine Öffnung 16 vorgesehen, so dass auf den Hohlraum 14 zugegriffen werden kann. In Figur 1 ist diese Öffnung durch eine Abdeckplatte 18 geschlossen, die mit Schrauben 21 an dem Stranggussprofil 12 befestigt ist. Der Hohlraum 14 erstreckt sich vorzugsweise von dem bodenseitigen Ende des montierten Stützbeins 10 über die gesamte Länge des Stranggussprofils, kann sich aber auch nur bis zu einer bestimmten Höhe und/oder ab einer bestimmten Höhe erstrecken, damit die Enden des Stützbeins ohne eine Öffnung 16 stabiler sind.

Die Außenkontur des Stranggussprofils ist vorzugsweise ein vieleckiges Profil, in der in Figur 1 dargestellten Ausführungsform ein im Wesentlichen quadratisches bzw. rechteckiges Profil, wobei eine Kante (eine Ecke des Querschnitts) entfernt wurde um die Öffnung 16 auszubilden. An der Außenseite 13 des Stranggussprofils 12 gibt es Vorsprünge 20, die sich von der Außenwand 13 nach innen erstrecken, und die in der bevorzugten Ausführungsform eine T-förmige Ausgestaltung aufweisen. Diese Vorsprünge 20 versteifen die Außenkontur und können vorzugsweise auch als Befestigungselement dienen, wie nachfolgend noch erläutert wird. Ferner sind Innenverstrebungen 22 vorgesehen, die ebenfalls der Erhöhung der Steifigkeit dienen und die das Stützbein 10 stabilisieren. In der in den Figuren 1 und 2 gezeigten Ausführungsform sind die Innenverstrebungen 22 zwischen der Außenwand 13 des Stranggussprofils 12 und einem Innenprofil 24 vorgesehen, sie können aber auch einfach nur zwischen den Außenwänden 13 vorgesehen sein. Beispielsweise könnten Innenverstrebungen 22 mittig von einer Wand 13 zur Mitte der anliegenden Wand 13 laufen. Die bevorzugte Ausführungsform ist jedoch eine, in der das Innenprofil 24 ausgebildet ist, das vorzugsweise einstückig mit der Außenwand 12 verbunden ist und die Innenverstrebungen 22 diese beiden Elemente verbinden. Das Innenprofil 24 weist vorzugsweise den Hohlraum 14 für die Kabel und Leitungen auf.

An einer oder an beiden Randbereichen 17 der Öffnung 16, vorzugsweise an dem Innenprofil 24, und/oder auch an einer oder mehreren der Wände 21 des Hohlraums 14 sind Befestigungsmittel 26, 27 vorgesehen, mit denen Anschlusselemente 32 oder die Abdeckplatte 18 befestigt werden können. Das Befestigungsmittel 26 ist hier vorzugsweise durch eine längliche Nut 26 am Rand der Öffnung 16 ausgebildet, insbesondere wie dargestellt an den beiden Seitenabschnitten der Öffnung 16 und/oder in der Rückwand 21 des Hohlraums 14. Die Nut 26 ist vorzugsweise durchgehend, so dass die Anschlusselemente 32 oder auch die Abdeckplatte 18 in einer beliebigen Höhe angeordnet und befestigt werden können, da keine Rücksicht auf den Befestigungsort genommen werden muss. Selbstverständlich können aber auch nur einzelne Schraubenlöcher vorgesehen sein, die in bestimmter Höhe des Stützbeins als Befestigungsmittel angeordnet sind. Weitere Möglichkeiten die Befestigungsmittel auszugestalten sind Clipsverbindungen, Steckverbindungen mit komplementären geformten Steckern oder auch eine magnetische Befestigung, sofern das Anschlusselement 32 eine solche Verbindung erlaubt. Eine andere Nut oder Aussparung 27 ist ebenfalls in dem Hohlraum vorzugsweise an seiner Rückwand 21 ausgebildet. In diese Nut oder Aussparung 27 können Anschlusselemente 32 mit entsprechenden Befestigungsvorrichtungen eingehakt werden.

Die Nut 26 weist an zumindest einem Abschnitt eine sich kontinuierlich verjüngende Form auf. Vorzugsweise ist dies der Abschnitt im Bodenbereich der Nut 26. Die Eingangsöffnung der Nut ist vorzugsweise 5 bis 1 mm, weiter vorzugsweise 3 bis 1 mm breit.

Ebenfalls könnten in bestimmten Abständen Stützstreben (nicht dargestellt) zwischen den beiden Randbereichen 17 der Öffnung vorgesehen sein, auf denen Anschlusselemente 32 abgestellt oder abgesetzt werden können. Diese Stützstreben können von einem Randbereich 17 der Öffnung 16 zum anderen laufen, so dass sie die Öffnung 16 in ein oder mehrere übereinander liegende Segmente aufteilen. Die Abdeckplatte 18 kann ebenso aus einer Mehrzahl von Segmenten bestehen, die einzeln an der Öffnung 16 des Stützbeins 10 befestigt oder abgenommen werden können. So können an einzelnen Stellen Anschlusselemente 32 angebracht werden, gleichzeitig aber kann das Äußere des Stützbeins 10 auch ansprechend gehalten werden.

Vorzugsweise sind die Befestigungsmittel 26 von Abdeckplatte 18 und Anschlusselementen 32 zumindest teilweise identisch.

D.h. zumindest ein Befestigungsmittel 26 wird zur Befestigung der Abdeckplatte 18 und der Anschlusselemente verwendet, so wie es die in Figur 1 gezeigte längliche Nut 26 an den Randbereichen 17 ist. Es ist jedoch möglich auch separate Befestigungsmittel 27 vorzusehen. Dies kann vorteilhaft sein, wenn beispielsweise die Anschlusselemente 32 sehr spezifische Befestigungsmittel benötigen.

An zumindest einer Seite der Öffnung 16 ist ein Anschlag 19 vorgesehen, an den die Abdeckplatte 18 oder die Kante eines Anschlusselements 32 angelegt werden kann. Es können auch auf beiden Seiten 19 der Öffnung 16 Anschlagelemente 19 oder Führungswände vorgesehen sein, wie dies in den Figuren gezeigt ist. Ferner kann an der weiter außen liegenden Kante des Anschlags 19 ein Vorsprung vorgesehen sein, der in Bezug auf die Öffnung 16 nach innen hervorsteht, so dass er über der Abdeckplatte liegt, bzw. die Abdeckplatte unter den Vorsprung geschoben werden kann oder in Art eines Clips unter diesen gedrückt werden kann. Dann würde der Anschlag 19 gleichzeitig als auch als Befestigungsmittel ausgebildet sein und fungieren, der die Abdeckplatte 18 oder das Anschlusselement 32 an dem Stützbein 10 hält.

Am tischseitigen Ende des Stützbeins 10 können Befestigungsmittel 20 vorgesehen sein, mit denen das Stützbein 10 an einer Arbeitsplatte 31 befestigt wird. Dies kann jedoch auch durch Schraubenlöcher in einer Seitenwand des Stützbeins 10 geschehen. Eine andere Möglichkeit der Befestigung des Stützbeins an einem Arbeitsmöbel 30 kann mit Hilfe der vorzugsweise T-förmigen Nuten 20 ausgeführt werden. Dazu wird ein entsprechendes (insbesondere komplementäres) Gegenstück (bspw. ein Nutenstein) in die Nut 20 eingeführt und dort vorzugsweise durch Schrauben befestigt, in dem das Gegenstück durch die Schraube in der Nut 20 verklemmt wird. Das Stützbein wirkt dabei für eine Befestigung am Arbeitsmöbel 30 beispielsweise mit einem Gestell aus Metall zusammen, das das Gegenstück umfasst.

Ferner können die Stützbeine 10 an ihrem Ende jeweils Steckverbindungselemente 29 aufweisen. In Figur 1 sind diese Elemente an drei Stellen vorgesehen, es können aber auch mehr oder weniger Steckverbindungselemente 29 sein, sofern die Verbindung der Stützbeine fest genug ist. Vorliegend sind die Steckverbindungselemente 29 als ringförmige Elemente ausgestaltet, die vorzugsweise eine Öffnung aufweisen. In diese Steckverbindungselemente 29 können Stifte (vorzugsweise aus Metall) eingeschoben werden, auf die die Steckverbindungselemente 29 eines weiteren Stützbeins 10 aufgesetzt werden, so dass das Stützbein beliebig verlängerbar ist. Die Öffnung in dem ringförmigen Element ermöglicht das Einschieben eines etwas breiteren Stifts, so dass ein fester Sitz des Stifts gewährleistet ist, ohne ein Gefahr die Steckverbindung 29 beim Einschieben des Stifts zu beschädigen, insbesondere zu brechen.

Vorzugsweise wird das Stützbein 10 für ein Arbeitsmöbel 30, bspw. ein Arbeitstisch, verwendet, der einen Kabelkanal (nicht gezeigt) aufweist. Der Hohlraum 14 des Stützbeins kann dabei mit dem Kabelkanal durch eine Öffnung in der Tischplatte bzw. in einer Wand des Kabelkanals mit dem inneren des Kabelkanals verbunden sein, so dass die Leitungen aus dem Stützbein 10 in den Kabelkanal geführt werden können.

## Patentansprüche

1. Stützbein (10) für ein Funktionsmöbel, umfassend ein sich längs erstreckendes Stranggussprofil (12) mit einem sich zumindest abschnittsweise längs erstreckenden Hohlraum (14), in dem Leitungen geführt werden können, wobei
das Stranggussprofil (12) an dem Hohlraum (14) eine sich zumindest abschnittsweise längserstreckende Öffnung (16) aufweist und an zumindest einem Randbereich der Öffnung (16) und/oder in dem Hohlraum (14) Befestigungsmittel (26) zum Befestigen von Anschlusselementen (32) vorgesehen sind, und das Stützbein ferner eine Außenwand (13) und ferner ein Innenprofil (24) und/oder zumindest eine Innenverstrebung (22) aufweist.

2. Stützbein (10) nach Anspruch 1, bei dem das Stranggussprofil (12) zumindest eine Innenverstrebung (22) aufweist.

3. Stützbein (10) nach Anspruch 1 oder 2, bei dem die Innenverstrebung (22) zwischen der Außenwand (13) des Stranggussprofils (12) und dem Innenprofil (24) angeordnet ist.

4. Stützbein (10) nach einem der vorhergehenden Ansprüche, bei dem das Innenprofil (24) einstückig mit dem Stranggussprofil (12) ausgebildet ist.

5. Stützbein (10) nach einem der vorhergehenden Ansprüche, bei dem das Stranggussprofil (12) eine vieleckige Außenkontur aufweist.

6. Stützbein (10) nach einem der vorhergehenden Ansprüche, bei dem das Befestigungsmittel zumindest eine sich längserstreckende Nut (26, 27) umfasst, die an zumindest einem Randbereich der Öffnung (16) und/oder im Hohlraum (14) angeordnet ist.

7. Stützbein (10) nach Anspruch 6, bei dem zumindest eine Nut (26) zur Schraubbefestigung von Anschlusselementen und/oder einer Abdeckplatte (18) ausgebildet ist.

8. Stützbein (10) nach Anspruch 6 oder 7, bei dem zumindest eine Nut (26) sich über die gesamte Länge des Hohlraums (14) erstreckt.

9. Stützbein (10) nach einem der Ansprüche 6 bis 8, bei dem die Nut (26) einen sich kontinuierlich verjüngenden Abschnitt aufweist.

10. Stützbein (10) nach einem der vorhergehenden Ansprüche, bei dem an den Randbereichen der Öffnung (16) zumindest Abschnittsweise ein Anschlag (19) vorgesehen ist.

11. Stützbein (10) nach einem der vorhergehenden Ansprüche, bei dem der Hohlraum (14) in dem Innenprofil (24) ausgebildet ist.

12. Arbeitsmöbel (30), bevorzugt Arbeitstisch, das zumindest ein Stützbein (10) nach einem der vorhergehenden Ansprüche aufweist.

13. Arbeitsmöbel (30) nach Anspruch 10, ferner umfassend einen Kabelkanal mit einem Hohlraum zum Aufnehmen von Kabeln, wobei der Hohlraum (14) des Stranggussprofils (12) mit dem Hohlraum des Kabelkanals verbunden ist.
